# EUROPÄISCHE PATENTANMELDUNG

(11) **EP 0 958 722 A1**
(43) Veröffentlichungstag der Anmeldung: **24.11.1999**
(21) Anmeldenummer: 99108944.2
(22) Anmeldetag: 05.05.1999
(51) Int. Cl.: A01B 49/06, A01B 51/04

(54) **Gezogene landwirtschaftliche Bestellkombination**

(30) Priorität: 13.05.1998 DE 19821394; 12.06.1998 DE 19826295; 13.08.1998 DE 19836780
(71) Anmelder: Amazonen-Werke H. Dreyer GmbH & Co. KG, 49205 Hasbergen (DE)
(72) Erfinder: Dreyer, Heinz Dr., 49205 Hasbergen (DE); Reinke, Wilfried, 26123 Oldenburg (DE); Gattermann, Bernd, 27798 Hude (DE); Tiessen, Reimer Uwe, 26135 Oldenburg (DE)

(57) **Zusammenfassung**

Gezogene landwirtschaftliche Bestellkombination mit einem Tragrahmen (2), der auf dem Boden abstützbare und vom Boden abhebbare Laufräder (6) aufweist, wobei an dem Tragrahmen (2) vor den Laufrädern (6) zumindest ein Bodenbearbeitungsgerät (9) und hinter den Laufrädern zumindest eine Bodenwalze (11) zur Tiefenführung des Bodenbearbeitungsgerätes (9) sowie eine Sävorrichtung (14) angeordnet sind, wobei auf dem Tragrahmen (2) vor dem Bodenbearbeitungsgerät (9) ein Vorratsbehälter (16) angeordnet ist, von dem aus das sich im Vorratsbehälter (16) befindliche Material über Förder- und Verteileinrichtungen der Sävorrichtung (14) zuführbar ist.

## Beschreibung

Die Erfindung betrifft eine gezogene landwirtschaftliche Bestellkombination gemäß des Oberbegriffes des Patentanspruches 1.

Der Erfindung liegt die Aufgabe zugrunde, eine gezogene landwirtschaftliche Bestellkombination zu schaffen, welche große Flächenleistungen mit einem Schlepper der eine geringe Hubkraft besitzt, zu ermöglichen.

Diese Aufgabe wird durch die Merkmale des Patentanspruches 1 gelöst.

Infolge dieser Maßnahmen ergibt sich eine gezogene landwirtschaftliche Bestellkombination, die einfach in ihrem Aufbau und einfach zu handhaben ist. Gemäß dieser vorgeschlagenen Maßnahmen können im Rahmen eines Baukastensystems Bauteile und Baugruppen aus dem Maschinenprogramm anderer Maschinen verwendet werden, so daß in vorteilhafter Weise die landwirtschaftliche Bestellkombination preiswert zusammengestellt werden kann. Ebenfalls ergibt sich durch die vorgeschlagenen Maßnahmen eine vorteilhafte Gewichtsverteilung bei der Anordnung der einzelnen Komponenten der Bestellkombination. Auch ist es möglich, verschiedene Sävorrichtungen in austauschbarer Weise an dem Tragrahmen anzuordnen.

Um große Arbeitsbreiten bei einer geringen Transportbreite zu erreichen, ist vorgesehen, daß das Bodenbearbeitungsgerät und die Sävorrichtung jeweils aus zwei zueinander seitlich des Tragrahmens einklappbaren Teilelementen bestehen, und daß das Bodenbearbeitungsgerät im Bereich hinter dem Vorratsbehälter einklappbar ist. Hierdurch ergibt sich bei Maschinen mit großer Arbeitsbreite eine sehr geringe Transportbreite.

Damit die Laufräder während des Bearbeitungsvorganges keine nachteiligen Spuren auf dem Feld hinterlassen, ist vorgesehen, daß die Laufräder an einer gegenüber dem Tragrahmen mittels einer Hubvorrichtung heb- und senkbaren Hubeinrichtung angeordnet sind. Infolge dieser Maßnahmen können die Laufräder vom Boden abgehoben werden, so daß die Bestellkombination sich auf der Bodenwalze abstützt. Zum Transport können die Laufräder abgesenkt werden, so daß der Tragrahmen mit dem Bodenbearbeitungsgerät und der Sävorrichtung für die Transportfahrt vom Boden abgehoben wird.

In manchen Fällen kann es vorteilhaft sein, daß vor dem Bodenbearbeitungsgerät eine Bodenwalze angeordnet ist. Hierdurch wird bei dem Einsatz der Bestellkombination auf vorab bearbeiteten und gepflügten Böden der Boden durch die vorgeordnete Bodenwalze vorverdichtet, bevor er von dem Bodenbearbeitungsgerät zerkleinert bzw. gekrümelt wird.

Um eine vorteilhafte Zuordnung von Bodenbearbeitungsgerät und Nachlaufwalze zu erreichen, kann es in einigen Fällen vorteilhaft sein, wenn in einer besonderen Ausführungsform das Bodenbearbeitungsgerät gegenüber dem Tragrahmen und/oder der Nachlaufwalze höhenverstellbar angeordnet ist.

Um in vorteilhafter Weise die Bearbeitungstiefe des Bodenbearbeitungsgerätes einstellen zu können, ist es vorteilhaft, daß die Bodenwalze gegenüber dem Tragrahmen in der Höhe verstellbar angeordnet ist.

In einer weiteren Ausführungsform ist vorgesehen, daß der Tragrahmen zumindest eine Flanschstelle aufweist, daß nach Lösen dieser Flanschstelle zwischen den beiden Flanschelementen ein Verlängerungsrahmen anordbar ist, daß nach Anordnen des Verlängerungsrahmens ein länger bauendes Bodenbearbeitungsgerät an dem Tragrahmen oder ein zusätzliches Bodenbearbeitungsgeräte an dem Tragrahmen anordbar ist. Infolge dieser Maßnahme wird ein universell einsetzbarer Tragrahmen im Rahmen eines Baukastensystems erreicht. Die Länge des Tragrahmens läßt sich so in einfacher Weise auf die erforderliche Länge je nachdem, welche Bodenbearbeitungsgeräte eingesetzt werden, bringen.

Die landwirtschaftliche Bestellkombination läßt sich universell für die verschiedensten Arbeitsbedingungen ausrüsten. Hierbei können dann auf der Rückseite des Tragrahmens je nach Einsatzfall verschiedenartige Sägeräte, wie Einzelkornsägeräte, Getreidesägeräte etc. im Rahmen eines Baukastensystems angeordnet werden.

Je nach Einsatzfall lassen sich an dem Tragrahmen verschiedenartig ausgebildete Bodenbearbeitungsgeräte anordnen. Hierbei ist vorgesehen, daß das Bodenbearbeitungsgerät in einem Einsatzfall als angetriebenes Bodenbearbeitungsgerät ausgebildet ist und über einen Gelenkwellenzug von der Zapfwelle des die Bestellkombination ziehenden Schleppers antreibbar ist. Es ist jedoch auch möglich, für einen anderen Einsatzfall an dem Tragrahmen ein Bodenbearbeitungegerät anzuordnen, das als nicht angetriebenes Bodenbearbeitungsgerät ausgebildet ist.

Um mit einfachen Maßnahmen eine vorteilhafte Anordnung der einzelnen Geräte an einem Tragrahmen zu erreichen, sind die kennzeichnenden Merkmale des Patentanspruches 12 vorgesehen. Infolge dieser Maßnahmen kann die vom Tragrahmen auf die Laufräder wirkende Belastung eingestellt werden. Hierbei kann die Bodenwalze gegenüber dem Tragrahmen und den Laufrädern derartig weit abgesenkt werden, daß die Laufräder vom Boden frei kommen, jedoch in einer anderen Einstellung auch so weit belastet werden können, daß keine Laufradspuren entstehen, d.h. daß die Laufräder den Boden nicht stärker andrücken als die nachgeordnete Nachlaufwalze. Hierdurch ergibt sich somit über die gesamte Arbeitsbreite eine homogene Verdichtung des Bodens. Somit übt die Nachlaufwalze die gleiche spezifische Flächenpressung wie die die Laufräder aus. Es entstehen also durch die Laufräder keine höheren spezifischen Drücke als bei der Nachlaufwalze. Es ist jedoch auch möglich, mehr Druck auf die Nachlaufwalze als auf die Laufräder zu geben, so daß die Laufräder quasi frei mitlaufen und das gesamte Gewicht von der Nachlaufwalze getragen wird. Die Laufräder wirken in diesem Fall stabilisierend, so daß die Kippgefahr vermindert wird.

Die Erfindung schlägt vor, daß die Bodenwalze mittels der hydraulische Stellelemente aufweisenden Tragelemente derart gegenüber dem Tragrahmen verstellbar ist, daß ein Teil und das gesamte auf die Laufräder lastende Gewicht der Bestellkombination auf die Bodenwalze übertragbar ist.
Als vorteilhaft hat sich in einer Ausführungsform herausgestellt, daß die Tragelemente derart ausgebildet sind, daß die an ihnen angeordneten Bodenwalzen oder Bodenbearbeitungsmaschinen gegenüber dem Tragrahmen frei nach oben ausweichen können. Somit werden also große Belastungsapitzen vermieden, wenn die Bodenbearbeitungswerkzeuge auf im Boden festsitzende Hindernissen auftreffen und nach oben ausweichen müssen.

Um in einfacher Weise Verstopfungen während der Arbeit beseitigen zu können, ist vorgesehen, daß die Betätigungselemente für die Stellelemente der Tragrahmen und für die Bodenwalze und für die Bodenbearbeitungsmaschine unabhängig voneinander betätigbar sind, so daß die Bodenbearbeitungsmaschine und die Bodenwalze unabhängig voneinander aushebbar sind.

Um mit der Bestellkombination gleichzeitig mit dem Bodenbearbeitungsvorgang das Saatgut ausbringen zu können, ist vorgesehen, daß vor der Bodenbearbeitungsmaschine auf dem Tragrahmen ein Vorratsbehälter angeordnet ist, von dem aus über Förder- und Verteileinrichtungen den hinter der Bodenwalze angeordneten Säscharen das zu verteilende Saatgut zuführbar ist.

In manchen Fällen kann es vorteilhaft sein, daß der Vorratsbehälter in oder entgegen der Fahrtrichtung verschiebbar auf dem Tragrahmen angeordnet ist.

In einigen Fällen hat es sich als vorteilhaft herausgestellt, daß im vorderen Bereich des Tragrahmens, und zwar in der Nähe des Ankuppelpunktes, ein Belastgewicht anordbar ist. Hierdurch wird erreicht, daß eine ausreichende Belastung der Hinterachse des Zugfahrzeuges gegeben ist, um auch in schwierigen Fällen eine ausreichende Zugkraft des Zugfahrzeuges zu gewährleisten.

Um insbesondere die Tiefenführung des vor den Laufrädern angeordneten Bodenbearbeitungsgerätes zu verbessern, sind die kennzeichnenden Merkmale des Patentanspruches 19 vorgesehen. Infolge dieser Maßnahmen kann das Bodenbearbeitungsgerät unabhängig von der Bodenwalze der Sävorrichtung in der Tiefe geführt werden. Durch die direkte Zuordnung der das Bodenbearbeitungsgerät in der Tiefe führenden Walze zu dem Bodenbearbeitungsgerät wird eine vorteilhafte Tiefenführung des Bodenbearbeitungsgerätes, welches in einem Parallelogrammgestänge an dem Tragrahmen aufgehängt ist, erreicht.

Eine vorteilhafte Anordnung der Bodenwalze wird dadurch erreicht, daß die Bodenwalze vor dem Bodenbearbeitungsgerät angeordnet ist.

Weitere Einzelheiten der Erfindung sind den übrigen Unteransprüchen, der Beispielsbeschreibung und den Zeichnungen zu entnehmen. Hierbei zeigen
- Fig.1: die gezogene Bestellkombination in Seitenansicht und in Transportstellung,
- Fig.2: die Bodenbearbeitungskombination gemäß Fig.1 in der Draufsicht,
- Fig.3: die Bodenbearbeitungskombination gemäß Fig.1 in angehobener Transportstellung, jedoch in noch nicht eingeklappter Transportstellung,
- Fig.4: eine weitere Ausgestaltung der Bestellkombination gemäß Fig.1, wobei vor dem Bodenbearbeitungsgerät eine Bodenwalze angeordnet ist,
- Fig.5: eine Bestellkombination in Seitenansicht und in Prinzipdarstellung und
- Fig.6: eine weitere gezogene Bestellkombination in Seitenansicht und in Prinzipdarstellung.

Die gezogene landwirtschaftliche Bestellkombination 1 weist den Tragrahmen 2 auf. An der Vorderseite des Tragrahmens 2 ist die Zugdeichsel 3 angeordnet, die über Kupplungselemente 4 mit dem Ackerschlepper 5 zu kuppeln ist. An der Rückseite des Tragrahmens 2 befinden sich die Laufräder 6, die über eine Hubeinrichtung 7 gegenüber dem Tragrahmen 2 anhebbar und absenkbar sind.

Vor den Laufrädern 6 ist die Kuppeleinrichtung 8 an dem Tragrahmen angeordnet. An dieser Kuppeleinrichtung 8 ist das angetriebene Bodenbearbeitungsgerät 9, das als Kreiselegge beispielhaft ausgebildet ist, angeordnet. Dieses Bodenbearbeitungsgerät 9 wird über einen nicht dargestellten Gelenkwellen- oder Getriebezug von der Zapfwelle des die Bestellkombination 1 ziehenden Ackerschleppers 5 angetrieben.

Auf der Rückseite des Tragrahmens 2 ist hinter den Laufrädern 6 mittels der Viergelenkgestänge 10 die Bodenwalze 11, die in einem Rahmen 12 drehbar angeordnet ist, angeordnet. Dem Viergelenkgestänge 10 ist eine Höheneinstelleinrichtung 13 zugeordnet. Hinter der Bodenwalze 11 sind an dem Rahmen 12 die Säschare 14 in aufrechter Ebene bewegbar angelenkt. Hinter den Säscharen 14 ist ein Striegel 15 angeordnet.

Im vorderen Bereich des Tragrahmens 2 ist der Vorratsbehälter 16 angeordnet. Dem Vorratsbehälter 16 sind nicht dargestellte Dosierorgane zugeordnet, über welche das sich im Vorratsbehälter 16 befindliche Material, wie Saatgut oder Dünger, in pneumatisch beaufschlagte, jedoch nicht dargestellte Förderleitungen, eingespeist wird, über welche das Material nicht dargestellten Verteileinrichtungen zugeleitet wird, über welche dann das Material auf die zu den Säscharen 14 führenden Schläuchen 17 aufgeteilt wird.

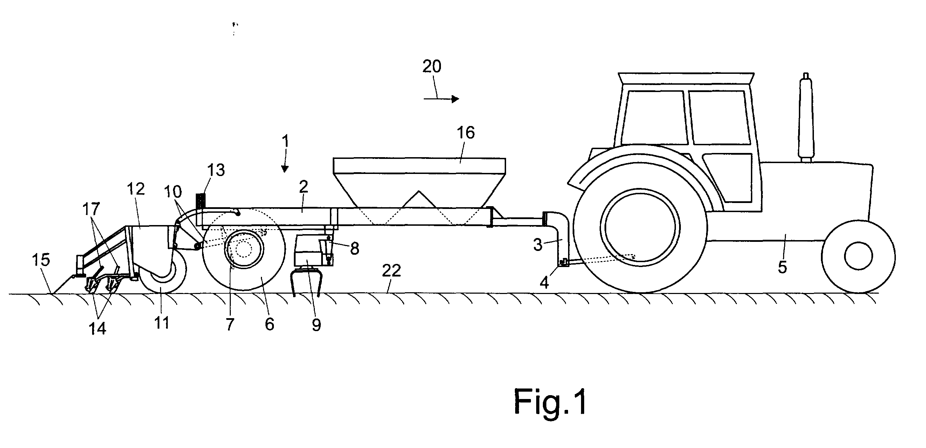

Während des Bearbeitungsvorganges sind die Laufräder 6, wie Fig.1 zeigt, vom Boden 22 abgehoben. Die Bestellkombination 1 stützt sich in diesem Fall auf der Bodenwalze 11 ab.

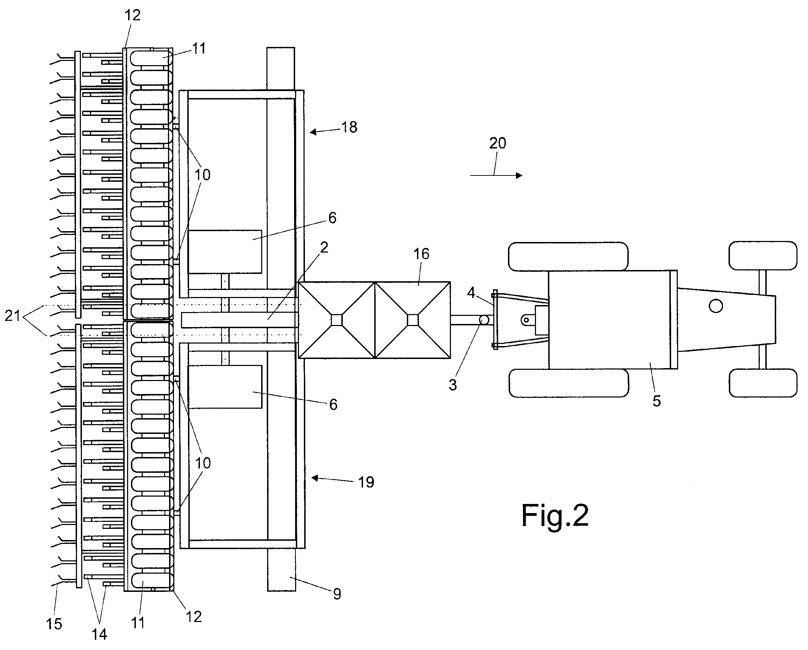

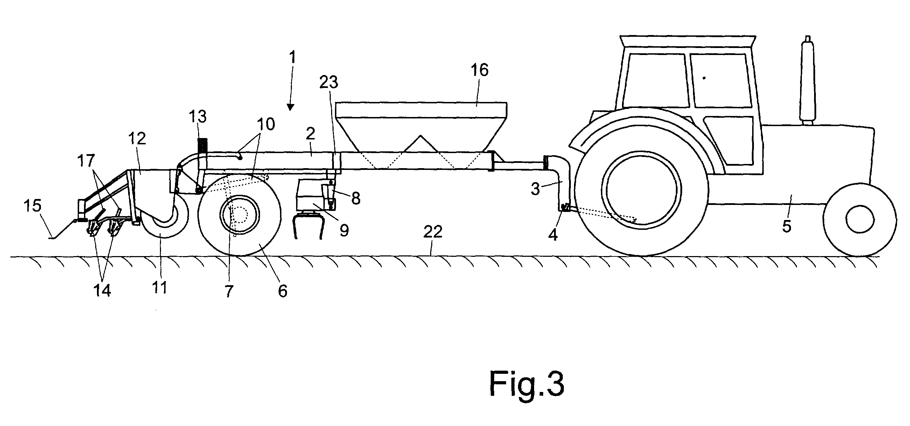

Das Bodenbearbeitungsgerät 9, die Sävorrichtung 14 und die Bodenwalze 11 bestehen, wie der Fig.2 entnehmbar ist, jeweils aus zwei zueinander seitlich des Tragrahmens 2 einklappbaren Teilelementen 18 und 19. Diese Teilelemente sind mittels nicht dargestellter Klappgelenke mit dem Tragrahmen 2 verbunden. Zwischen dem Tragrahmen 2 und den Teilelementen sind nicht dargestellte Hubelemente, wie beispielsweise Hydraulikzylinder angeordnet, über welche die Teilelemente des Bodenbearbeitungsgerätes 9, der Bodenwalze 11 und der Sävorrichtung 14 um in Fahrtrichtung 20 verlaufende Achsen 21 in eine aufrechte, jedoch nicht dargestellte Transportstellung, eingeklappt werden können. Bevor die Teilelemente in die aufrechte Transportstellung eingeklappt werden, werden die Laufräder 6 gegenüber dem Tragrahmen 2 über die Hubeinrichtung 7 nach unten gedrückt, so daß der Tragrahmen 2 mit dem Bodenbearbeitungsgerät 9, der Bodenwalze 11, der Sävorrichtung 14 und den Striegeln 15 vom Boden 22 abgehoben wird, wie Fig.3 zeigt.

In einigen Fällen kann es vorteilhaft sein, daß das Bodenbearbeitungsgerät 9 gegenüber dem Tragrahmen 2 und der Nachlaufwalze 11 an der Kuppeleinrichtung 8 in verschiedenen Positionen angeordnet werden kann, so daß das Bodenbearbeitungsgerät 9 gegenüber dem Tragrahmen 2 und der Nachlaufwalze 11 höhenverstellbar ist.

Wie bereits vorerwähnt, ist die Bodenwalze 11 gegenüber dem Tragrahmen 2 über die Höheneinstelleinrichtung 13 in der Höhe verstellbar, so daß die Bearbeitungstiefe des Bodenbearbeitungsgerätes 9 von der Bodenwalze 11 bestimmt wird.

Auf der Rückseite sind an dem Viergelenkgestänge 10 je nach Einsatzfall verschiedenartige Sägeräte, wie das dargestellte Getreidesägerät oder, jedoch nicht dargestellte Einzelkornsägeräte etc., anordbar.

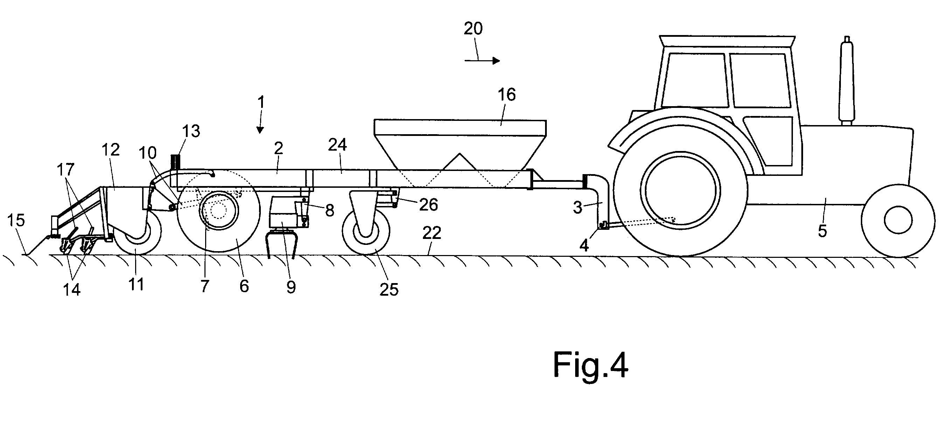

Auch ist es möglich, an der Kuppeleinrichtung 8 ein nicht angetriebenes Bodenbearbeitungsgerät anzuordnen. Falls das Bodenbearbeitungsgerät eine längere Bauweise als das in den Zeichnungen dargestellte Bodenbearbeitungsgerät 9 aufweist, ist die Flanschstelle 23 des Tragrahmens 2 zu lösen. Nach Lösen der Flanschstelle 23 kann dann ein Verlängerungsrahmen 24 zwischen diesen Flanschstellen 23, wie Fig.4 zeigt, angeordnet werden, so daß der Tragrahmen 2 eine größere Länge aufweist, so daß an dem Tragrahmen 2 ein länger bauendes Bodenbearbeitungsgerät und ein zusätzliches Bodenbearbeitungsgerät an dem Tragrahmen 2 anordbar ist. Hierbei kann es vorteilhaft sein, daß entgegen der Darstellung in den Ausführungsbeispielen das Kupplungselement an dem vorderen Rahmenteil 2' des Tragrahmens 2 angeordnet ist. Auch ist es möglich, an dem Tragrahmen 2 weitere Kupplungselemente anzuordnen, so daß an diesen zusätzlichen Kupplungselementen weitere Bodenbearbeitungsgeräte oder Bodenwalzen angeordnet werden können. Im Ausführungsbeispiel gemäß Fig.4 ist vor dem Bodenbearbeitungsgerät 9 eine zusätzliche Bodenwalze 25 angeordnet. Diese Bodenwalze 25 ist an dem an dem Verlängerungsrahmen 24 angeordneten Kupplungselement 26 angeordnet.

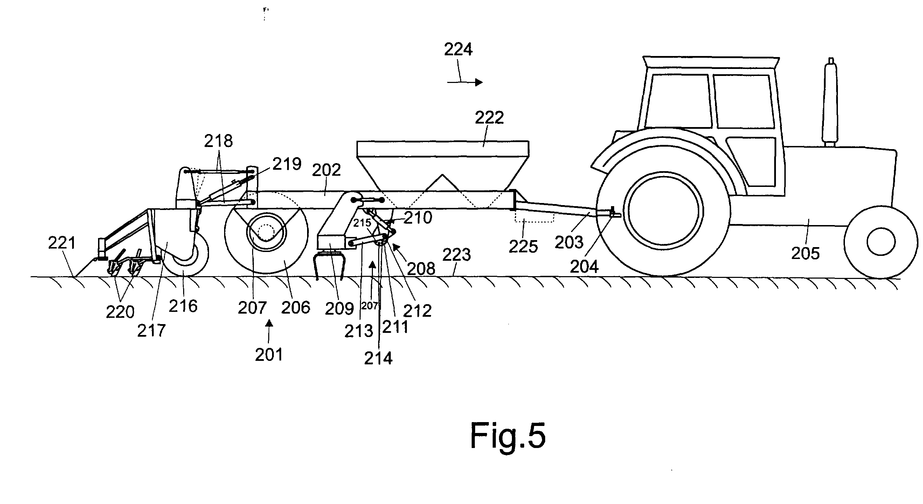

Die gezogene landwirtschaftliche Bestellkombination 201 gemäß Fig.5 weist den Tragrahmen 202 auf. An der Vorderseite des Tragrahmens 202 ist die Zugdeichsel 203 angeordnet, die über Kupplungselemente 204 mit dem Ackerschlepper 205 zu kuppeln ist. An der Rückseite des Tragrahmens befinden sich die Laufräder 206. Vor den Laufrädern 206 ist die Kuppeleinrichtung 207 an dem Tragrahmen 202 angeordnet. An dieser Kuppeleinrichtung 207 ist mittels eines Dreipunktkrafthebers 208 das motorisch angetriebene Bodenbearbeitungsgerät, das als Kreiselegge 209 ausgebildet ist, angeordnet. Dieses Bodenbearbeitungsgerät 209 wird über einen nicht dargestellten Gelenkwellen- oder Getriebezug von der Zapfwelle des die Bestellkombination 201 ziehenden Ackerschleppers 205 angetrieben. Dem Dreipunktkraftheber 208 ist ein Hydraulikzylinder 210 zugeordnet, mittels dem das Bodenbearbeitungsgerät 209 aushebbar ist. Der Hydraulikzylinder 210 greift an dem verstellbaren Element 211 an, welches auf dem Bolzen 212, an dem der jeweilige untere Hubarm 213 des Dreipunktkrafthebers 208 angreift, angeordnet ist. An diesem Stellelement 211 sind mehrere Bohrungen 214 vorgesehen, in welchen ein Bolzen 215 einsteckbar ist, auf dem der Hubarm 213 auflagert. Zum Ausheben wird über den Hydraulikzylinder 210 das Stellelement 211 bewegt, so daß die Bodenbearbeitungsmaschine 209 ausgehoben werden kann. Beim Auftreffen auf im Boden festsitzende Hindernisse kann das Bodenbearbeitungsgerät 209 gegenüber dem Tragrahmen 202 und den Laufrädern 206 frei nach oben ausweichen.

Auf der Rückseite des Tragrahmens 202 ist hinter den Laufrädern 206 die Nachlaufwalze 216 angeordnet. Die Nachlaufwalze 216 weist einen Rahmen 217 auf, der über Dreipunktkupplungselemente 218 an dem Tragrahmen 202 angeordnet ist. Den Dreipunktkupplungselementen 218 ist ein hydraulischer Kraftheber 219 zugeordnet. Hinter der Nachlaufwalze 216 sind die Säschare 220 der Sävorrichtung angeordnet. Hinter den Säscharen 220 befindet sich noch der Saatstriegel 221.

Auf der Vorderseite des Tragrahmens 202 ist der Vorratsbehälter 222 angeordnet, von dem aus über nicht dargestellte Dosiereinrichtungen und pneumatische Förder- und Verteileinrichtung das sich im Vorratsbehälter 222 befindliche Saatgut den Säscharen 220 in einstellbarer Weise zuführbar ist.

Die Bestellkombination ist in Arbeitsposition dargestellt.

In der dargestellten Position sind mittels des Hydraulikzylinders 219 über die Nachlaufwalze 216 die Laufräder 206 von dem Boden 223 abgehoben, so daß der Tragrahmen 202 und die Bestellkombination 201 von der Nachlaufwalze 216 getragen wird. Es ist jedoch auch möglich, über die Stellvorrichtung 219 die Laufräder 202 so zu belasten, daß ein Teil des Gewichtes des Tragrahmens 202 und der Maschine auf den Laufrädern 206 lastet.

Der Vorratsbehälter 222 kann in oder entgegen der Fahrtrichtung 224 mit entsprechenden Vorrichtungen verschiebbar an dem Tragrahmen 202 angeordnet sein.

Es ist möglich, im vorderen Bereich des Tragrahmens 202 und der Zugdeichsel 203, und zwar in der Nähe des Anlenkpunktes 204, das mit strichpunktierten Linien angedeutete Belastungsgewicht 225 anzuordnen.

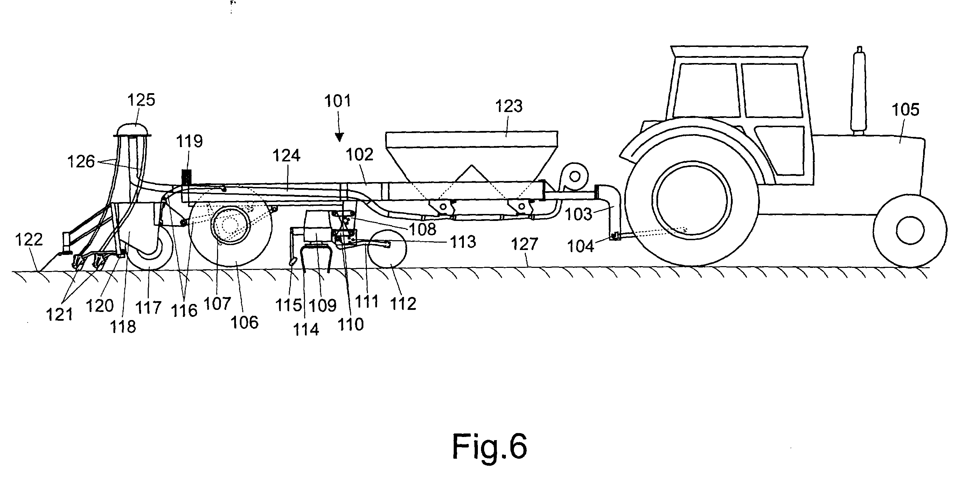

Die gezogene landwirtschaftliche Bestellkombination 101 gemäß Fig. 6 weist den Tragrahmen 102 auf. An der Vorderseite des Tragrahmens 102 ist die Zugdeichsel 103 angeordnet, die über Kupplungselemente 104 mit dem Ackerschlepper 105 zu kuppeln ist. An der Rückseite des Tragrahmens 102 befinden sich die Laufräder 106, die über eine Hubeinrichtung 107 gegenüber dem Tragrahmen 102 anhebbar und absenkbar sind.

Vor den Laufrädern 106 ist die Kuppeleinrichtung 108 an dem Tragrahmen angeordnet. An dieser Kuppeleinrichtung 108 ist das angetriebene Bodenbearbeitungsgerät 109, das als Kreiselegge beispielhaft ausgebildet ist, mittels des als Viergelenk ausgebildeten Parallelogrammgestänges 110 angeordnet. Dieses Bodenbearbeitungsgerät 109 wird über einen nicht dargestellten Gelenkwellen- oder Getriebezug von der Zapfwelle des die Bestellkombination 101 ziehenden Ackerschleppers 105 angetrieben.

Vor dem Bodenbearbeitungsgerät 109 ist mittels der Tragarme 111 die Bodenwalze 112 angeordnet. Die Bodenwalze 112 ist über die Einstelleinrichtung 113 gegenüber dem Bodenbearbeitungsgerät 109 zur Tiefeneinstellung des Bodenbearbeitungsgerätes angeordnet. Hinter den Bodenbearbeitungswerkzeugen 114 des Bodenbearbeitungsgerätes 109 ist die Planierschiene 115 in höheneinstellbarer Weise angeordnet.

Auf der Rückseite des Tragrahmens 102 ist hinter den Laufrädern 106 mittels der Viergelenkgestänge 116 die Bodenwalze 117, die in einem Rahmen 118 drehbar angeordnet ist, angeordnet. Dem Viergelenkgestänge 116 ist eine Höheneinstelleinrichtung 119 zugeordnet. Hinter der Bodenwalze 117 sind an dem Rahmen 120 die Säschare 121 in aufrechter Ebene bewegbar angelenkt. Hinter den Säscharen 121 ist ein Striegel 122 angeordnet.

Im vorderen Bereich des Tragrahmens 102 ist der Vorratsbehälter 123 angeordnet. Dem Vorratsbehälter 123 sind nicht dargestellte Dosierorgane zugeordnet, über welche das sich im Vorratsbehälter 123 befindliche Material , wie Saatgut oder Dünger, in pneumatsich beaufschlagte Förderleitungen 124, eingespeist wird, über welche das Material den Verteileinrichtungen 125 zugeleitet wird, über welche dann das Material auf die zu den Säscharen 121 führenden Schläuchen 126 aufgeteilt wird.

Während des Bearbeitungsvorganges sind die Laufräder 106, wie die Zeichnung zeigt, vom Boden 127 abgehoben. Die Bestellkombination 101 stützt sich in diesem Fall auf der Bodenwalze 117 ab.

Durch das Anheben der Laufräder zur Arbeit stützt sich die Bestellkombination, wie gesagt auf die Bodenwalze 117 ab. Da die Bodenwalze 117 sehr weit hinten und hinter den Laufrädern 106 angeordnet ist und der Vorratsbehälter 123 sich im vorderen Bereich des Tragrahmens 123 in der Nähe der Kuppeleinrichtung 104 befindet, erfolgt während der Arbeit eine Gewichtsverlagerung auf die Schlepperhinterräder, die durch die zusätzliche Belastung weniger Schlupf haben. Dieses wirkt sich vorteilhaft aus. Zum Transport auf der Straße und zum Wenden am Feldende werden die Laufräder 106 gegenüber dem Tragrahmen 102 abgesenkt, so daß die Bestellkombination angehoben und die Bodenwalze 117, die Säschare 121 und der Striegel 122 sowie das Bodenbearbeitungsgerät 109 mit der Bodenwalze 112 und der Planierschiene 115 vom Boden abgehoben werden.

## Patentansprüche

1. Gezogene landwirtschaftliche Bestellkombination mit einem Tragrahmen, der auf dem Boden abstützbare und vom Boden abhebbare Laufräder aufweist, wobei an dem Tragrahmen vor den Laufrädern zumindest ein Bodenbearbeitungsgerät und hinter den Laufrädern zumindest eine Bodenwalze zur Tiefenführung des Bodenbearbeitungsgerätes (9) sowie eine Sävorrichtung (14) angeordnet sind, wobei auf dem Tragrahmen (2) vor dem Bodenbearbeitungsgerät (9) ein Vorratsbehälter (16) angeordnet ist, von dem aus das sich im Vorratsbehälter (16) befindliche Material über Förder- und Verteileinrichtungen der Sävorrichtung (14) zuführbar ist.

2. Bestellkombination nach Anspruch 1, dadurch gekennzeichnet, daß das Bodenbearbeitungsgerät (9) und die Sävorrichtung (14) jeweils aus zwei zueinander seitlich des Tragrahmens (2) einklappbaren Teilelementen (18) besteht, daß das Bodenbearbeitungsgerät (9) in dem Bereich hinter dem Vorratsbehälter (16) einklappbar ist.

3. Bestellkombination nach Anspruch 1, dadurch gekennzeichnet, daß die Laufräder (6) an einer gegenüber dem Tragrahmen (2) mittels einer Hubvorrichtung (7) heb- und senkbaren Hubeinrichtung angeordnet sind.

4. Bestellkombination nach Anspruch 1, dadurch gekennzeichnet, daß an der Rückseite die Bodenwalze (11) ankuppelbar ist, daß der Tragrahmen (2) sich auf der Bodenwalze (11) im Betriebszustand der Bestellkombination (1) abstützt.

5. Bestellkombination nach einem oder mehreren der vorstehenden Ansprüche, dadurch gekennzeichnet, daß vor dem Bodenbearbeitungsgerät (9) eine Bodenwalze (25) anordbar ist.

6. Bestellkombination nach einem oder mehreren der vorstehenden Ansprüche, dadurch gekennzeichnet, daß das Bodenbearbeitungsgerät (9) gegenüber dem Tragrahmen (2) und/oder der Nachlaufwalze (11) höhenverstellbar angeordnet ist.

7. Bestellkombination nach einem oder mehreren der vorstehenden Ansprüche, dadurch gekennzeichnet, daß die Bodenwalze (11) gegenüber dem Tragrahmen (2) in der Höhe verstellbar angeordnet ist.

8. Bestellkombination nach einem oder mehreren der vorstehenden Ansprüche, dadurch gekennzeichnet, daß der Tragrahmen (2) zumindest eine Flanschstelle (23) aufweist, daß nach Lösen dieser Flanschstelle (23) zwischen den beiden Flanschelementen (23) ein Verlängerungsrahmen (24) anordbar ist, daß nach Anordnen des Verlängerungsrahmens (24) ein länger bauendes Bodenbearbeitungsgerät an dem Tragrahmen oder ein zusätzliches Bodenbearbeitungsgerät (25) an dem Tragrahmen (2) anordbar ist.

9. Bestellkombination nach einem oder mehreren der vorstehenden Ansprüche, dadurch gekennzeichnet, daß auf der Rückseite des Tragrahmens (2) je nach Einsatzfall verschiedenartige Sägeräte (14), wie Einzelkornsägeräte, Getreidesägeräte etc. anordbar sind.

10. Bestellkombination nach einem oder mehreren der vorstehenden Ansprüche, dadurch gekennzeichnet, daß das Bodenbearbeitungsgerät (9) als angetriebenes Bodenbearbeitungsgerät ausgebildet ist und über einen Gelenkwellenzug von der Zapfwelle des die Bestellkombination ziehenden Schleppers (5) antreibbar ist.

11. Bestellkombination nach Anspruch 1, dadurch gekennzeichnet, daß das Bodenbearbeitungsgerät als nicht angetriebenes Bodenbearbeitungsgerät ausgebildet ist.

12. Gezogene landwirtschaftliche Bestellkombination mit einem sich auf dem Boden über Laufräder abstützbaren Tragrahmen insbesondere nach Anspruch1, dadurch gekennzeichnet, daß vor den Laufrädern (206) zumindest eine motorisch angetriebene Bodenbearbeitungsmaschine (209) und hinter den Laufrädern (206) zumindest eine Bodenwalze (216) angeordnet ist, daß die Bodenbearbeitungsmaschine (209) und die Bodenwalze (216) jeweils mittels vorzugsweise hydraulische Stellelemente (210, 219) aufweisbare anheb- und absenkbare Tragelemente (207, 218) an dem Tragrahmen (202) angeordnet sind.

13. Bestellkombination nach Anspruch 1 und/oder 12, dadurch gekennzeichnet, daß die Bodenwalze (216) mittels der hydraulische Stellelemente (219) aufweisenden Tragelemente (218) derart gegenüber dem Tragrahmen (202) verstellbar ist, daß ein Teil oder das gesamte auf die Laufräder (206) lastende Gewicht der Bestellkombination (201) auf die Bodenwalze (216) übertragbar ist.

14. Bestellkombination nach einem oder mehreren der vorstehenden Ansprüche, dadurch gekennzeichnet, daß die Tragelemente (207, 218) derart ausgebildet sind, daß die an ihnen angeordneten Bodenwalzen (216) und/oder Bodebearbeitungsmaschinen (209) gegenüber dem Tragrahmen (202) frei nach oben ausweichen können.

15. Bestellkombination nach einem oder mehreren der vorstehenden Ansprüche, dadurch gekennzeichnet, daß die Betätigungselemente für die Stellelemente (210, 219) der Tragrahmen (202) und für die Bodenwalze (216) und für die Bodenbearbeitungsmaschine (209) unabhängig voneinander betätigbar sind, so daß die Bodenbearbeitungsmaschine (209) und die Bodenwalze (216) unabhängig voneinander aushebbar sind.

16. Bestellkombination nach einem oder mehreren der vorstehenden Ansprüche, dadurch gekennzeichnet, daß vor der Bodenbearbeitungsmaschine (209) auf dem Tragrahmen (202) ein Vorratsbehälter (222) angeordnet ist, von dem aus über Förder- und Verteileinrichtungen den hinter der Bodenwalze (216) angeordneten Säscharen (220) das zu verteilende Gut zuführbar ist.

17. Bodenwalze nach einem oder mehreren der vorstehenden Ansprüche, dadurch gekennzeichnet, daß im vorderen Bereich des Tragrahmens (202), und zwar in der Nähe des Ankuppelpunktes (204), ein Balastgewicht (225) anordbar ist.

18. Bestellkombination nach einem oder mehreren der vorstehenden Ansprüche, dadurch gekennzeichnet, daß der Vorratsbehälter (222) im oder entgegen der Fahrtrichtung (224) verschiebbar auf dem Tragrahmen (202) angeordnet ist.

19. Gezogene landwirtschaftliche Bestellkombination insbesondere nach Anspruch1, dadurch gekennzeichnet, daß dem vor den Laufrädern (106) angeordnete Bodenbearbeitungsgerät (109) eine gegenüber dem Bodenbearbeitungagerät (109) mittels einer Einstellvorrichtung (113) verstellbare Bodenwalze (112) zur Tiefeneinstellung des Bodenbearbeitungsgerätes (109) zugeordnet ist, und daß das Bodenbearbeitungsgerät (109) mittels eines Parallelogrammgestänges (110) am Tragrahmen (102) angeordnet ist.

20. Bestellkombination nach Anspruch 1 oder 19, dadurch gekennzeichnet, daß das Bodenbearbeitungsgerät (109) als motorisch angetriebene Bodenbearbeitungsmaschine ausgebildet ist.

21. Bestellkombination nach Anspruch 1 oder 19, dadurch gekennzeichnet, daß hinter den Bodenbearbeitungswerkzeugen (114) der Bodenbearbeitungsmaschine (109) eine Planierschiene (115) angeordnet ist.

22. Bestellkombination nach Anspruch 1 oder 19, dadurch gekennzeichnet, daß die Bodenwalze (112) vor dem Bodenbearbeitungsgerät (109) angeordnet ist.
